# EUROPÄISCHE PATENTSCHRIFT

(11) **EP 1 532 570 B1**
(45) Veröffentlichungstag und Bekanntmachung des Hinweises auf die Patenterteilung: **28.02.2007**
(21) Anmeldenummer: 03790673.2
(22) Anmeldetag: 04.08.2003
(51) Int. Cl.: G06K 7/00, H01C 7/105

(54) **ORGANISCHES BAUELEMENT ZUM ÜBERSPANNUNGSSCHUTZ UND DAZUGEHÖRIGE SCHALTUNG**
ORGANIC COMPONENT FOR OVERVOLTAGE PROTECTION AND ASSOCIATED CIRCUIT
COMPOSANT ORGANIQUE PROCURANT UNE PROTECTION CONTRE LES SURTENSIONS ET CIRCUIT ASSOCIE

(30) Priorität: 23.08.2002 DE 10238800
(43) Veröffentlichungstag der Anmeldung: 25.05.2005
(73) Patentinhaber: PolyIC GmbH & Co. KG, 90763 Fürth (DE)
(72) Erfinder: FIX, Walter, 90427 Nürnberg (DE); ZIPPERER, Dietmar, 91052 Erlangen (DE)
(74) Vertreter: Zinsinger, Norbert
(86) Internationale Anmeldenummer: PCT/DE2003/002612
(87) Internationale Veröffentlichungsnummer: WO 2004/021256

(56) Entgegenhaltungen:
- WO-A-96/02924
- WO-A-98/18186
- US-B1- 6 251 513

## Beschreibung

Die Erfindung betrifft ein Bauelement aus vorwiegend organischem Material, das einen Überspannungsschutz für elektronische Schaltungen bietet.

Es sind elektronische Bauelemente zum Überspannungsschutz basierend auf anorganischen, auf herkömmlicher Siliziumhalbleitertechnologie aufbauenden Schaltungen bekannt. Beispielhaft genannt seien Zener-Dioden und Tunnel-Dioden.

Aus der Wo 96/02924 ist ein Element zum Überspannungsschutz bekannt, in dem organisches Material eingesetzt wird. Dort wird eine Dielektrikumsschicht aus polymerem Kunststoff oder Glas oder Keramik vorgeschlagen, die einerseits mit einer geerdeten Platte und andererseits mit einer leitfähigen Schicht in Kontakt ist. Die Dielektrikumsschicht kann verschiedene Füllstoffe enthalten, die ihr verschiedene Eigenschaften verleihen können. Es wird jedoch nicht im Hinblick auf low-cost products eine Verwendung halbleitender oder gar halbleitender organischer Materialien zum Überspannungsschutz vorgeschlagen.

Organische elektronische Bauelemente und daraus aufgebaute Schaltungen werden im Hinblick auf lowest-cost Anwendungen wie RFID-Tags (Radio Frequency Identification), Tickets, Wearable electronics (elektronische Schaltungen, die in Textilien eingearbeitet sind), etc. entwickelt. Sie sind kostengünstig und durch einfache Druckprozesse großflächig herstellbar. Diese Schaltungen brauchen eine konstante Spannungsversorgung, wobei Schäden durch Spannungsspitzen, beispielsweise wenn die Schaltung der Sende-Antenne zu nahe kommt oder wenn man das RFID Tag zu schnell durch ein elektromagnetisches Wechselfeld bewegt, vermieden werden müssen. Es ist bislang noch kein elektronisches Bauelement bekannt, das - vergleichbar zum organischen Feld-Effekt-Transistor - vorwiegend organisches Material umfasst.

Aufgabe der vorliegenden Erfindung ist es daher, ein elektronisches Bauelement zu schaffen, das vorwiegend organisches Material umfasst und das einen Überspannungsschutz bietet, das heißt bei Unter- oder Überschreiten einer einstellbaren Schwellwertspannung wirkt das Bauelement als Widerstand, der den Stromfluss unterbricht und umgekehrt, wobei die elektrische Kapazität des Bauteils gering ist.

Gegenstand der Erfindung ist ein elektronisches Bauelement zum Überspannungschutz, zumindest eine organische halbleitende Funktionsschicht umfassend, zumindest folgende Schichten aufweisend:
ein Substrat, darauf
eine primäre Elektrode, dann
eine organische halbleitende Funktionsschicht und darauf eine sekundäre Elektrode, wobei sich durch die Wahl der Elektrodenmaterialien und/oder des Materials für die halbleitende Schicht die Schwellwertspannung einstellen lässt. Außerdem ist Gegenstand der Erfindung eine Schaltung, zumindest zwei Bauelemente, die vorwiegend organische Materialien umfassen, zum Überspannungsschutz in Reihe geschaltet umfassend, wobei durch die Reihenschaltung eine Schwellwertspannung realisiert wird, die einem Mehrfachen der Schwellwertspannung der einzelnen Bauelemente entspricht.

Nach einer Ausführungsform umfasst das Bauelement zumindest eine Zwischenschicht zwischen einer der Elektroden und der organischen Halbleiterschicht. Die Zwischenschicht kann beispielsweise vorwiegend aus organischem und/oder oxidischem Material sein. Durch das Einfügen der zumindest einen Zwischenschicht lässt sich die Schwellwertspannung innerhalb einiger Volt einstellen.

Das Bauelement wird in Vorwärtsrichtung betrieben, das heißt, dass bis zu der Schwellwertspannung kein Strom (oder nur ein vernachlässigbar kleiner Strom) fließt, oberhalb der Schwellwertspannung hingegen ein sehr hoher Strom, so dass die Spannung einer leistungsbegrenzten Stromquelle zusammenbricht. In Sperrrichtung fließt kein Strom (oder nur ein vernachlässigbar kleiner Strom).

Nach einer Ausführungsform werden zumindest zwei Bauelemente in Reihe geschaltet. Dadurch kann eine gewünschte Schwellwertspannung, welche dem Vielfachen der Schwellwertspannung der einzelnen Bauelemente entspricht, erreicht werden.

Der einfache Aufbau des Bauelements aus leitenden und halbleitenden Schichten erlaubt eine Integration in organische Schaltungen. Die leitenden und/oder die halbleitenden Schichten können dabei durch ein Verfahren und/oder durch gemeinsame Prozessschritte, beispielsweise Druckverfahren, hergestellt werden.

Im folgenden wird die Erfindung noch anhand von Ausführungsformen näher erläutert.
- Figur 1: zeigt den einfachen Aufbau des erfindungsgemäßen Bauteils ohne Zwischenschichten.
- Figur 2: zeigt ein Ausführungsbeispiel mit zwei Zwischenschichten,
- Figur 3: zeigt zwei Bauelemente, die in Reihe geschaltet sind,
- Figur 4: zeigt die entsprechenden Strom-Spannungskurven zu Figur 3 und
- Figur 5: zeigt schließlich ein Bauelement mit einem lateralen Aufbau.

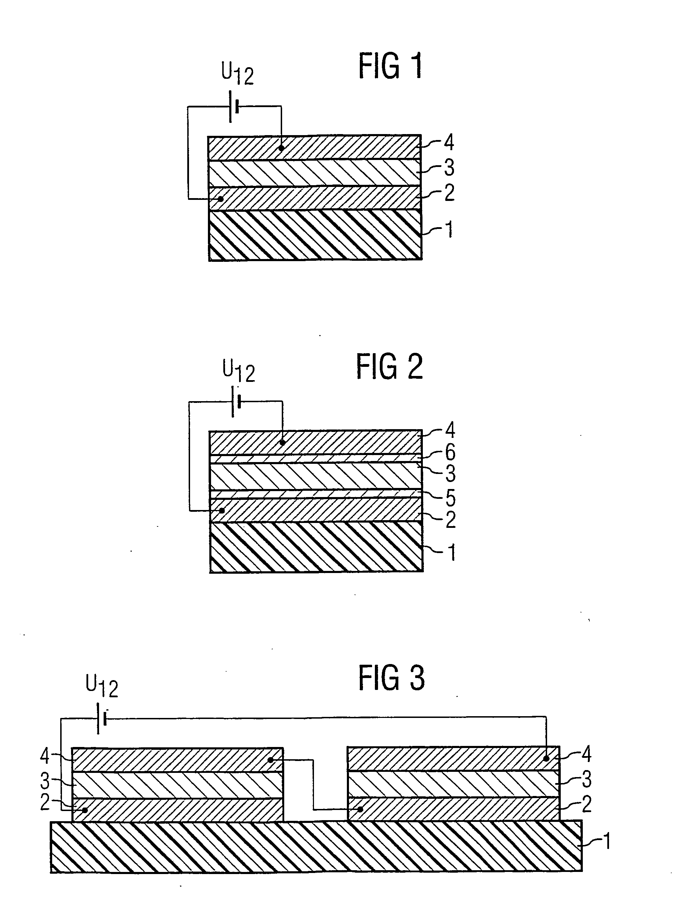

In Figur 1 ist das Substrat 1, beispielsweise aus einer flexiblen Folie wie einer Polyester-Folie, zu sehen, darauf liegend (Realisierung des vertikalen Aufbaus) die primäre Elektrode 2, die beispielsweise aus organischem Material wie Pani, PEDOT oder aus Metallen oder Legierungen wie Gold, Kupfer, Aluminium, Titan ist, darauf befindlich die halbleitende Schicht 3, die auf organischer Basis aus beispielsweise Polythiophen und/oder Polyfluoren ist, darauf die sekundäre Elektrode 4, deren Material wieder beispielsweise Pani, Pedot oder ein Metall oder eine Legierung wie Gold, Kupfer, Aluminium, Titan ist. Im Gegensatz zu herkömmlichen Bauelementen hat dieses Bauelement eine hohe Schwellwertspannung, welche sich durch die Wahl der Elektrodenmaterialien und des Halbleitermaterials einstellen lässt.

In Figur 2 ist ein Bauelement gezeigt, das einen mit der Figur 1 vergleichbaren Schichtaufbau betreffend die Schichten 2 bis 4 und das Substrat 1 hat, wobei jedoch zwischen der primären Elektrode 2 und der halbleitenden Schicht 3 sowie zwischen der halbleitenden Schicht 3 und der sekundären Elektrode 4 jeweils eine Zwischenschicht (5,6) eingebaut ist, durch die die Schwellwertspannung verschiebbar ist. Die Zwischenschichten 5,6 können aus verschiedensten Materialien sein, wie z.B. organischem Material wie Polythiophen, Polyfluoren (beide Materialien dotiert oder undotiert), Pani, Pedot oder aus oxidischem Material wie Metalloxid oder Siliziumoxid.

Figur 3 zeigt zwei Bauelemente in Reihe geschaltet, wobei der Schichtaufbau nach dieser Ausführungsform dem des Einzelbauelements der Figur 1 gleicht.

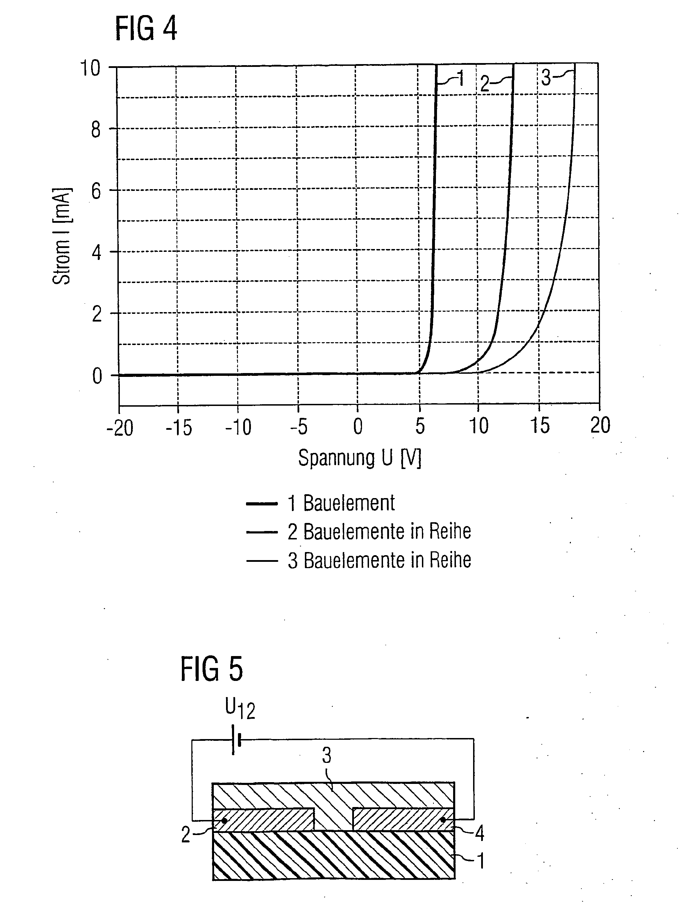

Figur 4 zeigt die Strom-Spannungskennlinien von in Reihe geschalteten Bauelementen. Dabei ist zu erkennen, wie durch die Reihenschaltung mehrerer Bauelemente (Figur 3) auch eine Schwellwertspannung, welche dem Vielfachen der Schwellwertspannung eines einzelnen Bauelements entspricht, erreicht werden kann.

Schließlich zeigt Figur 5 den lateralen Aufbau eines Bauelements wie es grundsätzlich aus Figur 1 bekannt ist. Zu erkennen ist wieder ein Substrat 1, eine primäre Elektrode 2, eine halbleitende Schicht 3 und eine sekundäre Elektrode 4.

Durch die Wahl geeigneter Elektroden und/oder Halbleitermaterialien lässt sich die Schwellwertspannung sehr gut einstellen. Ebenso kann durch ein oder zwei zusätzliche Zwischenschichten aus anderen Halbleitermaterialien wie z.B. dünnen Isolationsschichten oder Oxiden die Schwellwertspannung verschoben werden. Die Reihenschaltung mehrerer Bauelemente ermöglicht zudem eine grobe Anpassung an die jeweiligen Anforderungen.

Die Kapazität des Bauelements ist abhängig von der Schichtdicke und der materialspezifischen Dielektrizitätszahl des organischen Halbleiters. Mittels entsprechend dicker Schichten kann die Kapazität klein gehalten werden.

Die Herstellung des Bauelements erfolgt mittels bekannter Verfahren. Die einzelnen Schichten werden durch Sputtern und/oder Verdampfen oder aber bei löslichen Materialien wie z.B. Polymeren durch Spincoating und/oder anderen Beschichtungsverfahren und/oder Druckverfahren aufgebracht. Die Strukturierung kann einerseits durch herkömmliche Verfahren wie Ätzen und Lift-Off in Verbindung mit Lithographie vorgenommen werden oder andererseits durch Drucktechniken.

Konkret kann das Bauelement, z.B. aus Figur 1, wie folgt hergestellt werden: Auf einer flexiblen Polyester Folie 1 wird eine Metallschicht 2 (z.B. Gold) aufgesputtert, welche mittels Lithographie und Ätzen strukturiert wird. Anschließend wird ein in Lösung gebrachtes halbleitendes Polymer (z.B. Polythiophen) durch Spincoating aufgeschleudert. Nach dem Verdampfen des Lösungsmittels entsteht eine homogene halbleitende Schicht 3. Auf diese wird eine sekundäre Elektrode 4 (z.B. Aluminium) - durch eine Schattenmaske strukturiert - aufgesputtert.

Der Begriff "organisch", "organisches Material" oder "Funktionspolymer" oder "Polymer" umfasst hier alle Arten von organischen, metallorganischen und/oder organisch-anorganischen Kunststoffen (Hybride), insbesondere die, die im Englischen z.B. mit "plastics" bezeichnet werden. Es handelt sich um alle Arten von Stoffen mit Ausnahme der Halbleiter, die die klassischen Dioden bilden (Germanium, Silizium), und der typischen metallischen Leiter. Eine Beschränkung im dogmatischen Sinn auf organisches Material als Kohlenstoffenthaltendes Material ist demnach nicht vorgesehen, vielmehr ist auch an den breiten Einsatz von z.B. Siliconen gedacht. Weiterhin soll der Term keiner Beschränkung im Hinblick auf die Molekülgröße, insbesondere auf polymere und/oder oligomere Materialien unterliegen, sondern es ist durchaus auch der Einsatz von "small molecules" möglich. Der Wortbestandteil "polymer" im Funktionspolymer ist historisch bedingt und enthält insofern keine Aussage über das Vorliegen einer tatsächlich polymeren Verbindung.

Mit dieser Erfindung wird erstmals ein organisches Bauelement vorgestellt, das als Überspannungsschutz funktioniert und in organische Schaltungen integriert werden kann.

## Patentansprüche

1. Elektronisches Bauelement zum Überspannungsschutz, zumindest eine Schicht aus einem organischen halbleitenden Funktionspolymer und zwei leitfähige Schichten umfassend, wobei folgender Schichtaufbau realisiert ist:
ein Substrat, darauf
eine primäre Elektrode, darauf
die organische halbleitende Funktionsschicht und darauf eine sekundäre Elektrode, wobei sich durch die Wahl der Elektrodenmaterialien und/oder des Materials für die halbleitende Schicht die Schwellwertspannung einstellen lässt.

2. Bauelement nach Anspruch 1, das zumindest eine Zwischenschicht zwischen einer der Elektroden und der organischen Halbleiterschicht hat.

3. Schaltung, zumindest zwei Bauelemente nach einem der Ansprüche 1 oder 2, zum Überspannungsschutz in Reihe geschaltet umfassend, wobei durch die Reihenschaltung eine Schwellwertspannung realisiert wird, die einem Mehrfachen der Schwellwertspannung der einzelnen Bauelemente entspricht.

## Claims

1. Electronic component for overvoltage protection, comprising at least one layer made of an organic semiconducting functional polymer and two conductive layers, wherein the following layer construction is realized:
a substrate, thereon
a primary electrode, thereon
the organic semiconducting functional layer and thereon a secondary electrode, wherein the threshold voltage can be established by the choice of the electrode materials and/or of the material for the semiconducting layer.

2. Component according to Claim 1, which has at least one interlayer between one of the electrodes and the organic semiconductor layer.

3. Circuit, comprising at least two components according to either of Claims 1 and 2 for overvoltage protection connected in series, wherein a threshold voltage corresponding to a multiple of the threshold voltage of the individual components is realized by the connection in series.

## Revendications

1. Composant électronique pour la protection contre les surtensions, comportant au moins une couche en polymère fonctionnel semi-conducteur organique et deux couches conductrices, dans lequel est réalisée la structure de couches suivante :
- un substrat,
- une électrode primaire déposée sur celui-ci,
- la couche fonctionnelle organique semi-conductrice, déposée sur ladite électrode, et une électrode secondaire, déposée sur ladite couche, sachant que le choix des matériaux pour les électrodes et/ou du matériau pour la couche semi-conductrice permet de régler la valeur seuil de la tension.

2. Composant selon la revendication 1, qui comporte au moins une couche intermédiaire entre une des électrodes et la couche semi-conductrice organique.

3. Circuit, comportant au moins deux composants selon une des revendications 1 ou 2 pour la protection contre les surtensions, montés en série, dans lequel le montage en série permet de réaliser une valeur seuil de tension qui correspond à un multiple de la valeur seuil de tension de chacun des composants.
